# EUROPEAN PATENT SPECIFICATION

(11) **EP 3 901 722 B1**
(45) Date of publication and mention of the grant of the patent: **01.05.2024**
(21) Application number: 19899521.9
(22) Date of filing: 29.10.2019
(51) Int. Cl.: G05D 1/02, A01B 69/00

(54) **TRAVEL STATE DISPLAY DEVICE AND AUTOMATED TRAVEL SYSTEM**
FAHRZUSTANDSANZEIGEVORRICHTUNG UND AUTOMATISIERTES FAHRSYSTEM
DISPOSITIF D'AFFICHAGE D'ÉTAT DE DÉPLACEMENT ET SYSTÈME DE DÉPLACEMENT AUTOMATISÉ

(30) Priority: 21.12.2018 JP 2018239166
(43) Date of publication of application: 27.10.2021
(73) Proprietor: Yanmar Power Technology Co., Ltd., Osaka-shi Osaka 530-0013 (JP)
(72) Inventor: YOKOYAMA, Kazuhisa, Osaka-shi, Osaka 530-0014 (JP); MURATA, Sosuke, Osaka-shi, Osaka 530-0014 (JP); NAKAMURA, Keiji, Osaka-shi, Osaka 532-0003 (JP)
(74) Representative: Vigand, Philippe
(86) International application number: PCT/JP2019/042278
(87) International publication number: WO 2020/129413

(56) References cited:
- EP-A1- 3 351 079
- JP-A- 2010 211 827
- JP-A- 2018 099 113
- US-A1- 2007 233 348
- US-B2- 7 256 388

## Description

### TECHNICAL FIELD

The present invention relates to a travel state display device for displaying a travel state of a work vehicle and an automatic travel system for causing a work vehicle to automatically travel.

### BACKGROUND ART

Conventionally, a farm field management system for collecting and processing information on agricultural work by using a computer network and providing information on an agricultural work plan has been proposed (see, for example, Patent Literature 1).

The system described in Patent Literature 1 includes a map data recording unit configured to record farm field map data as a farm field map layer, and a farm field work data recording unit configured to generate farm field work data for each work executed by a work vehicle such as a tractor, a rice transplanter, and a combine to record the work data as a model-specific farm field work layer. The farm field map data and the farm field work data are managed with a common coordinates position, and based on the farm field work data, a farming management of a farm field is evaluated.

The farm field work data includes a travel trajectory of a work vehicle, and Patent Literature 1 proposes, as one of the farming management evaluations, for example, a working travel route (a pattern of a harvesting row) of a combine that determines a harvesting row in consideration of a working travel trajectory (a pattern of a planting row) of a rice transplanter that determines a planting row. Another prior art document is US 2007/233348 A1.

### CITATION LIST

### Patent Literature

PTL 1: Japanese Patent No. 6363579

### DISCLOSURE OF INVENTION

### PROBLEMS TO BE SOLVED BY THE INVENTION

As in the system described in Patent Literature 1, in a case where travel position information such as a travel trajectory of a working vehicle is acquired, when a certain work vehicle performs a work, if it is possible to utilize past travel position information of another work vehicle, it is possible to improve the work efficiency.

However, in the system described in Patent Literature 1, a feature that when a work is performed by a combine, a working travel route of the combine is proposed by utilizing a past travel trajectory of a rice transplanter is merely described, but in what way the travel trajectory of the rice transplanter is utilized to propose what kind of working travel route of a combine is not described. Therefore, when a work is performed by a certain work vehicle, past travel position information of another work vehicle is not sufficiently utilized for improvement of the work efficiency, and thus, there is room for improvement in this respect.

In view of this situation, a primary subject of the present invention is to provide a travel state display device and an automatic travel system capable of effectively utilizing, in performing a work using a certain work vehicle, travel position information relating to past travel positions of another work vehicle, thereby improving the work efficiency.

### MEANS FOR SOLVING THE PROBLEMS

### EFFECT OF THE INVENTION

A first characteristic configuration of the present invention is to include a first travel position information recording unit that acquires and records first travel position information relating to a travel position of a first work vehicle that travels in a travel region by using a satellite positioning system,
a second travel position information acquisition unit that acquires second travel position information relating to a travel position of a second work vehicle when the second work vehicle travels in the travel region by using the satellite positioning system, the second work vehicle being different from the first work vehicle, and
a display control unit that causes a display unit to display the first travel position information and the second travel position information in a superimposed manner when the second work vehicle travels in the travel region.

According to the configuration, the display control unit causes the display unit to display the first travel position information and the second travel position information in a superimposed manner when the second work vehicle travels in the travel region, and thus, a user or the like can visually recognize the display unit to grasp a relationship between the first traveling position information and the second traveling position information. As a result, it is possible to ensure that the second work vehicle travels efficiency by effectively utilizing the first travel position information, and thus, it is possible to improve a working efficiency.

A second characteristic configuration of the present invention is that the first travel position information includes a first wheel passing position when the first work vehicle travels in the travel region,
the second travel position information includes a scheduled second wheel passing position estimated from a current position of the second work vehicle and obtained when the second work vehicle travels in the travel region, and
the display control unit causes the display unit to display the first wheel passing position of the first work vehicle and the scheduled second wheel passing position of the second work vehicle in a superimposed manner.

For example, the first wheel passing position has a ground deepened by a weight of the traveling first work vehicle. Therefore, when the second work vehicle travels, if the scheduled second wheel passing position overlaps with the first wheel passing position, the second work vehicle may possibly slip and the work efficiency may decrease. Therefore, according to the configuration, the display control unit causes the display unit to display the first wheel passing position and the scheduled second wheel passing position in a superimposed manner, and thus, it is possible to ensure that the second work vehicle travels so that the scheduled second wheel passing position of the second work vehicle that travels this time does not overlap with the first wheel passing position. As a result, it is possible to previously prevent the second work vehicle from slipping, and thus, it is possible to effectively improve the work efficiency.

A third characteristic configuration of the present invention is to include a first wheel passing position recording unit that acquires and records a first wheel passing position of a first work vehicle that travels in a travel region by using a satellite positioning system,
a scheduled second wheel passing position acquisition unit that acquires a scheduled second wheel passing position when a second work vehicle different from the first work vehicle travels in the travel region,
a travel route generation unit that generates, in the travel region, a target travel route of the second work vehicle so that the first wheel passing position differs from the scheduled second wheel passing position, and
an automatic travel control unit that causes the second work vehicle to automatically travel along the target travel route generated by the travel route generation unit, based on position information of the second work vehicle acquired by using the satellite positioning system.

According to the present configuration, the travel route generation unit generates, in the travel region, the target travel route of the second work vehicle so that the first wheel passing position differs from the scheduled second wheel passing position. The automatic travel control unit causes the second work vehicle to automatically travel along the target travel route generated by the travel route generation unit, based on the position information of the second work vehicle, and thus, it is possible to ensure that the second work vehicle automatically travels in a state where the first wheel passing position and the scheduled second wheel passing position are different. As a result, in a system for causing the second work vehicle to automatically travel, it is possible to cause the second work vehicle to automatically travel while previously preventing the second work vehicle from slipping, and thus, in addition to a merit obtained from the automatic traveling, it is possible to further effectively improve the work efficiency.

A fourth characteristic configuration of the present invention is to include a provisional route generation unit that generates, in the travel region, a provisional route corresponding to the second work vehicle, in which
when the first wheel passing position overlaps with the scheduled second wheel passing position in the provisional route, the travel route generation unit generates the target travel route of the second work vehicle by changing the provisional route in a manner that the scheduled second wheel passing position is shifted relative to the first wheel passing position by a predetermined amount in a direction orthogonal to a travel direction over the entire provisional route.

According to the configuration, when the first wheel passing position overlaps with the scheduled second wheel passing position in the provisional route, the travel route generation unit changes the provisional route in a manner that the scheduled second wheel passing position is shifted relative to the first wheel passing position by a predetermined amount in a direction orthogonal to the travel direction over the entire provisional route, and thus, it is possible to appropriately generate the target travel route over which the first wheel passing position and the scheduled second wheel passing position are different and which corresponds to the second work vehicle. Moreover, in generating the target travel route, it is only necessary to change the provisional route over the entire provisional route, and thus, the target travel route can be easily generated.

A fifth characteristic configuration of the present invention is to include a provisional route generation unit that generates, in the travel region, a provisional route corresponding to the second work vehicle, in which
when the first wheel passing position overlaps with the scheduled second wheel passing position in the provisional route, the travel route generation unit generates the target travel route of the second work vehicle by changing the provisional route in a manner that the scheduled second wheel passing position is shifted relative to the first wheel passing position by a predetermined amount in a direction orthogonal to a travel direction, in a part of the provisional route in which the first wheel passing position overlaps with the scheduled second wheel passing position in the provisional route.

According to the configuration, when the first wheel passing position overlaps with the scheduled second wheel passing position in the provisional route, the travel route generation unit changes the provisional route in a manner that the scheduled second wheel passing position is shifted relative to the first wheel passing position by a predetermined amount in a direction orthogonal to the travel direction in a part of the provisional route, and thus, it is possible to appropriately generate the target travel route over which the first wheel passing position and the scheduled second wheel passing position are different and which corresponds to the second work vehicle. Moreover, in generating the target travel route, it is only necessary to change only a part of the provisional route, and thus, it is possible to generate the target travel route more appropriate to a work performed by the second work vehicle so that the provisional route corresponding to the second work vehicle is utilized as much as possible, and the first wheel passing position and the scheduled second wheel passing position are different.

### BRIEF DESCRIPTION OF DRAWINGS

FIG. 1 is a diagram illustrating a simplified configuration of an automatic travel system.
FIG. 2 is a block diagram illustrating a simplified configuration of the automatic travel system.
FIG. 3 is a diagram illustrating a work area in a state where a target travel route is generated.
FIG. 4 is a diagram illustrating a relationship between a past wheel passing position and a scheduled current wheel passing position.
FIG. 5 is a diagram illustrating a relationship between a past wheel passing position and a scheduled current wheel passing position.
FIG. 6 is a diagram illustrating a relationship between a past wheel passing position in a state where a provisional route is generated and a scheduled current wheel passing position in the provisional route.
FIG. 7 is a diagram illustrating a mode in which the scheduled current wheel passing position is shifted in a first provisional route change process.
FIG. 8 is a diagram illustrating a mode in which the scheduled current wheel passing position is shifted in a second provisional route change process.
FIG. 9 is a flowchart illustrating an operation when a target travel route is generated.
FIG. 10 is a diagram illustrating a state in which the past wheel passing position and the scheduled current wheel passing position are displayed on a display unit in a superimposed manner.

### DESCRIPTION OF EMBODIMENTS

An embodiment of a travel state display device and an automatic travel system according to the present invention will be described with reference to the drawings.

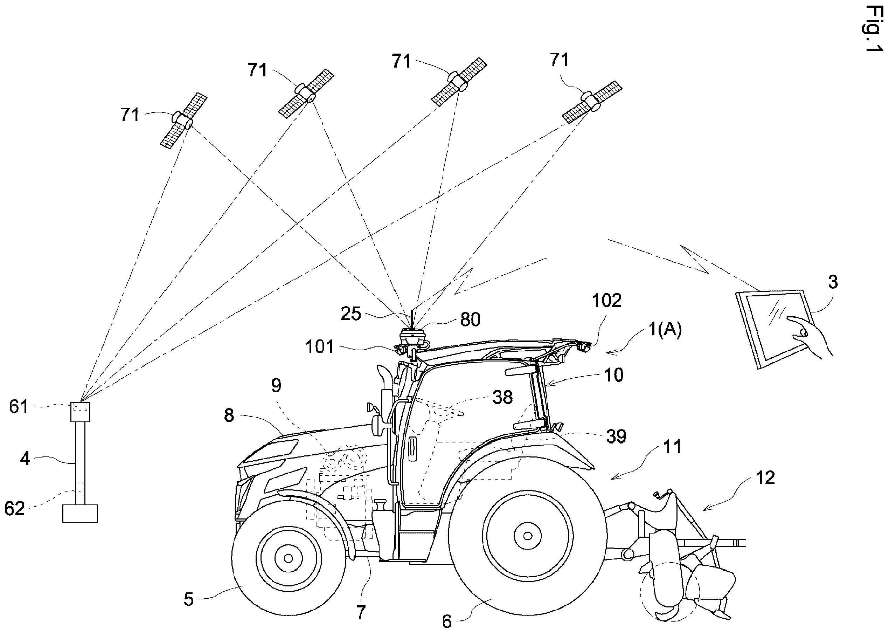

As illustrated in FIG. 1, the automatic travel system is applied to a tractor 1 as a work vehicle A, however, may be applied to a riding-type work vehicle such as a riding-type rice transplanter, a combine, a riding-type grass mower, a wheel loader, and a snowplow, and an unmanned work vehicle such as an unmanned grass mower, other than a tractor.

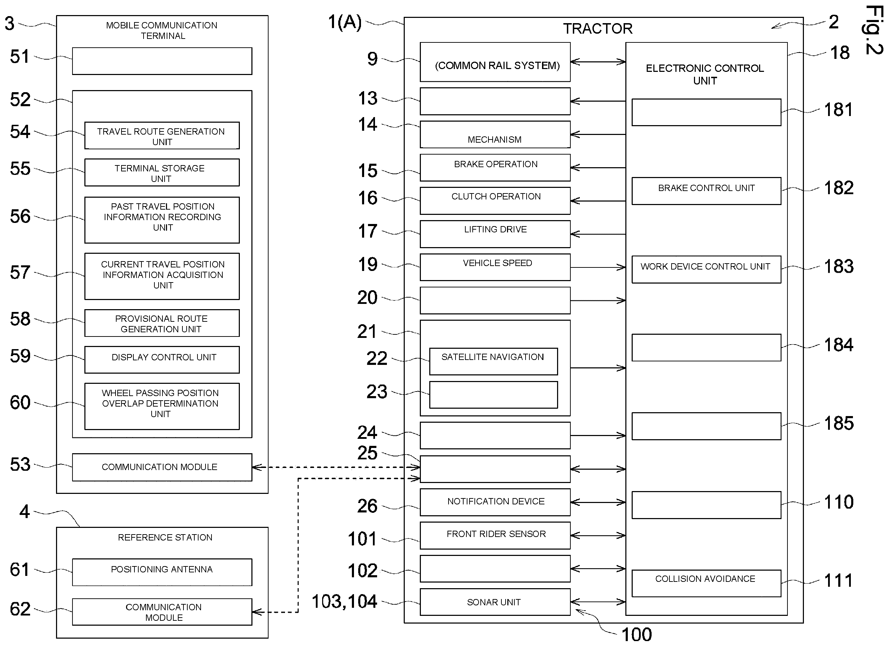

As illustrated in FIGS. 1 and 2, the automatic traveling system includes an automatic travel unit 2 mounted on the tractor 1 and a mobile communication terminal 3 (corresponding to a travel state display device) set to communicate with the automatic traveling unit 2. The mobile communication terminal 3 may include a tablet-type personal computer or a smartphone including a touch-operable touch panel-type display unit 51 (for example, a liquid crystal panel).

The tractor 1 includes left and right front wheels 5 functioning as driveable steering wheels, and a traveling machine body 7 including driveable left and right rear wheels 6. A bonnet 8 is arranged forward of the traveling machine body 7, and an electronically controlled diesel engine (hereinafter, referred to as "engine") 9 equipped with a common rail system is provided in the bonnet 8. A cabin 10 forming a boarding-type driving unit is provided rearward of the bonnet 8 of the traveling machine body 7.

A rear part of the traveling machine body 7 may be coupled, via a three-point link mechanism 11, with a rotary tilling device, which is an example of a work device 12, in a manner to allow lifting and rolling. Instead of the rotary tilling device, various types of work devices 12 such as a mower, a plow, a seeding device, and a spraying device may be coupled to a rear part of the tractor 1.

As illustrated in FIG. 2, the tractor 1 includes an electronically controlled transmission device 13 configured to transmit power from an engine 9, a fully hydraulic power steering mechanism 14 configured to steer the left and right front wheels 5, left and right side brakes (not illustrated) configured to brake the left and right rear wheels 6, an electronically controlled brake operation mechanism 15 configured to enable hydraulic operation of the left and right side brakes, a work clutch (not illustrated) configured to connect and disconnect transmission to the work device 12 such as a rotary tilling device, an electronically controlled clutch operation mechanism 16 configured to enable hydraulic operation of the work clutch, an electro-hydraulically controlled lifting drive mechanism 17 configured to drive the work device 12 such as the rotary tilling device to lift and lower the work device 12, a vehicle-mounted electronic control unit 18 including various types of control programs and the like relating to an automatic travel of the tractor 1 and the like, a vehicle speed sensor 19 configured to sense a vehicle speed of the tractor 1, a steering angle sensor 20 configured to sense a steering angle of the front wheels 5, and a positioning unit 21 configured to measure a current position and a current azimuth of the tractor 1.

It is noted that an electronically controlled gasoline engine including an electronic governor may be employed for the engine 9. A hydromechanical transmission (HMT), a hydrostatic transmission (HST), a belt-type continuously variable transmission, or the like may be employed for the transmission device 13. An electric power steering mechanism 14 including an electric motor, or the like may be employed for the power steering mechanism 14.

As illustrated in FIG. 1, the cabin 10 includes therein a steering wheel 38 by which it is possible to manually steer the left and right front wheels 5 via the power steering mechanism 14 (see FIG. 2), a driver seat 39 for a passenger, a touch panel-type display unit, and various types of operating tools.

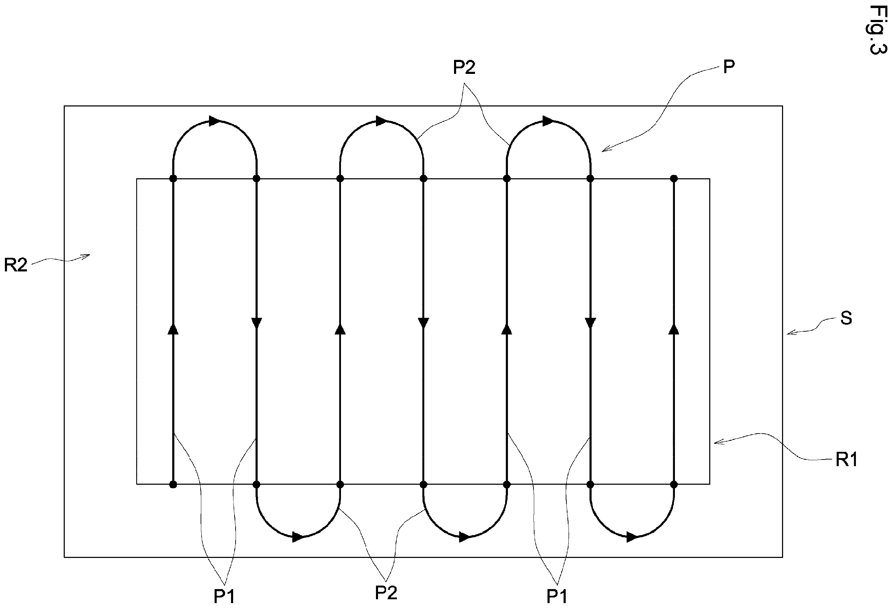

As illustrated in FIG. 2, the vehicle-mounted electronic control unit 18 includes a transmission control unit 181 configured to control an actuation of the transmission device 13, a braking control unit 182 configured to control actuations of the left and right side brakes, a work device control unit 183 configured to control an actuation of the work device 12 such as the rotary tilling device, a steering angle setting unit 184 configured to set a target steering angle of the left and right front wheels 5 to output the target steering angle to the power steering mechanism 14 during automatic travel, and a non-volatile vehicle-mounted storage unit 185 configured to store a previously generated target travel route P (for example, see FIG. 3) for automatic travel and the like.

As illustrated in FIG. 2, the positioning unit 21 includes a satellite navigation device 22 configured to measure a current position and a current azimuth of the tractor 1 by utilizing Global Positioning System (GPS) being an example of a satellite positioning system (Navigation Satellite System: NSS), an inertial measurement unit (IMU) 23 including a three-axis gyroscope, a three-directional acceleration sensor, and the like, and being configured to measure the posture, the azimuth, and the like of the tractor 1. A positioning method utilizing the GPS includes Differential GPS (DGPS, a relative positioning method) and Real Time Kinematic GPS (RTK-GPS, an interference positioning method). In the present embodiment, RTK-GPS suitable for measuring a position of a moving body is adopted. Therefore, as illustrated in FIGS. 1 and 2, a reference station 4 by which it is possible to measure a position by RTK-GPS is installed at a known position in the vicinity of a farm field.

As illustrated in FIG. 2, the tractor 1 and the reference station 4 respectively include positioning antennas 24 and 61 configured to receive a radio wave transmitted from a positioning satellite 71 (see FIG. 1) and communication modules 25 and 62 configured to enable radio communication of various types of information including positioning information between the tractor 1 and the reference station 4. This enables the satellite navigation device 22 to highly accurately measure a current position and a current azimuth of the tractor 1, based on positioning information obtained by the positioning antenna 24 on a tractor side receiving a radio wave from the positioning satellite 71 and positioning information obtained by the positioning antenna 61 on a base station side receiving a radio wave from the positioning satellite 71. Further, the positioning unit 21 includes the satellite navigation device 22 and the inertial measurement unit 23, and thus, can highly accurately measure a current position, a current azimuth, and an attitude angle (a yaw angle, a roll angle, and a pitch angle) of the tractor 1.

The positioning antenna 24, the communication module 25, and the inertial measurement unit 23 provided in the tractor 1 are housed in an antenna unit 80, as illustrated in FIG. 1. The antenna unit 80 is arranged at an upper position on the front side of the cabin 10.

As illustrated in FIG. 2, the mobile communication terminal 3 includes a terminal electronic control unit 52 including various types of control programs and the like for controlling an actuation of the display unit 51 and the like, a communication module 53 configured to enable radio communication of various types of information including positioning information with the communication module 25 on the tractor side. The terminal electronic control unit 52 includes a travel route generation unit 54 configured to generate a target travel route P (see, for example, FIG. 3) for causing the tractor 1 to automatically travel, and a non-volatile terminal storage unit 55 configured to store, for example, various types of input information input by the user and the target travel route P generated by the travel route generation unit 54.

Upon the travel route generation unit 54 generating the target travel route P, according to an input guide for setting the target travel route displayed on the display unit 51 of the mobile communication terminal 3, a user, for example, such as a driver and an administrator, inputs vehicle body information such as a model of the work vehicle A, a type, a work width, and the like of the work device 12, and the input vehicle body information is stored in the terminal storage unit 55. A travel region S (see FIG. 3) in which the target travel route P is to be generated is defined as a farm field, and the terminal electronic control unit 52 of the mobile communication terminal 3 acquires farm field information including a shape and a position of the farm field and stores the information in the terminal storage unit 55.

Acquisition of the farm field information will be described. When a user or the like drives the tractor 1 to cause the tractor 1 to actually travel, the terminal electronic control unit 52 can acquire position information for identifying a shape, a position, and the like of the farm field from the current position of the tractor 1 and the like acquired by the positioning unit 21. The terminal electronic control unit 52 identifies the shape and the position of the farm field from the acquired position information, and acquires the farm field information including the travel region S identified from the identified shape and position of the farm field. FIG. 3 illustrates an example in which the travel region S having a rectangular shape is identified.

If the farm field information including the identified shape, position, and the like of the farm field is stored in the terminal storage unit 55, the travel route generation unit 54 generates the target travel route P by using the farm field information and the vehicle body information stored in the terminal storage unit 55.

As illustrated in FIG. 3, the travel route generation unit 54 divides and sets an inside of the travel region S into a central region R1 and an outer peripheral region R2. The central region R1 is set in a central portion of the travel region S, and is a reciprocating work region in which the tractor 1 is caused to automatically travel in a reciprocating direction to perform a predetermined work (for example, a work such as a tillage). The outer peripheral region R2 is set around the central region R1. The travel route generation unit 54 evaluates a space and the like for turning and traveling required for turning and traveling the tractor 1 at an edge of a dike of the farm field, from a turning radius included in the vehicle body information, a front-rear width and a left-right width of the tractor 1, and the like. The travel route generation unit 54 divides the inside of the travel region S into the central region R1 and the outer peripheral region R2 to secure the evaluated space or the like in an outer periphery of the central region R1.

As illustrated in FIG. 3, the travel route generation unit 54 generates the target travel route P by using the vehicle body information, the farm field information, and the like. The target travel route P includes, for example, a plurality of linear work routes P1 each having the same straight distance and being arranged in parallel at a fixed interval corresponding to a work width in the central region R1, and a plurality of coupling routes P2. The plurality of work routes P1 are routes along which the tractor 1 travels linearly to perform a predetermined work. Each of the coupling routes P2 is a U-turn route for changing a travel direction of the tractor 1 by 180 degrees, where no predetermined work is performed, and couples a terminal end of each of the work routes P1 and a start end of the next work route P1.

It is noted that the target travel route P illustrated in FIG. 3 is merely an example, and any target travel route to be set may be appropriately changed. For example, the travel route generation unit 54 may generate only the work route P1 without generating the coupling route P2. For example, the travel route generation unit 54 may generate an initial linear route, based on a movement trajectory obtained when the user or the like drives the tractor 1 to cause the tractor 1 to actually travel, and generate a plurality of parallel routes parallel to the initial linear route to define the initial linear route and the plurality of parallel routes as the work route P1. In this case, the initial linear route may be appropriately extended and a plurality of parallel routes parallel to the extended initial linear route may be generated.

The target travel route P generated by the travel route generation unit 54 may be displayed on the display unit 51, and is stored in the terminal storage unit 55 as route information associated with the vehicle body information, the farm field information, and the like. The route information includes the azimuth angle of the target travel route P, and an engine rotation speed and target travel speed set in accordance with a traveling mode and the like of the tractor 1 on the target travel route P.

Thus, when the travel route generation unit 54 generates the target travel route P, the terminal electronic control unit 52 transfers the route information from the mobile communication terminal 3 to the tractor 1, and as a result, the vehicle-mounted electronic control unit 18 of the tractor 1 can acquire the route information. The vehicle-mounted electronic control unit 18 can cause the tractor 1 to automatically travel along the target travel route P, based on the acquired route information, while acquiring the current position of the vehicle-mounted electronic control unit 18 (the current position of the tractor 1) by the positioning unit 21. The current position of the tractor 1 acquired by the positioning unit 21 is transmitted from the tractor 1 to the mobile communication terminal 3 in real time (for example, in a cycle of a few milliseconds), and thus, the current position of the tractor 1 is grasped by the mobile communication terminal 3.

When the route information is transferred, at a stage before the tractor 1 starts the automatic travel, the entire route information may be transferred from the terminal electronic control unit 52 to the vehicle-mounted electronic control unit 18 all at once. Alternatively, for example, the route information including the target travel route P may be divided into a plurality of route portions each having a small amount of information for each predetermined distance. In this case, at a stage before the tractor 1 starts the automatic travel, only an initial route portion of the route information may be transferred from the terminal electronic control unit 52 to the vehicle-mounted electronic control unit 18. After the start of the automatic travel, each time the tractor 1 reaches a route acquisition point set in accordance with the amount of information or the like, the route information having only a subsequent route portion corresponding to the point may be transferred from the terminal electronic control unit 52 to the vehicle-mounted electronic control unit 18.

For example, when the automatic travel of the tractor 1 is started, once the user or the like moves the tractor 1 to a start point and if various types of automatic travel start conditions are satisfied, the user operates the display unit 51 in the mobile communication terminal 3 to instruct the start of the automatic travel, as a result, the mobile communication terminal 3 transmits, to the tractor 1, an instruction to start the automatic travel. Therefore, in the tractor 1, when the vehicle-mounted electronic control unit 18 receives the instruction to start the automatic travel, and as a result, the vehicle-mounted electronic control unit 18 starts the automatic travel control to cause the tractor 1 to automatically travel along the target travel route P while acquiring the current position of the tractor 1 (the current position of the tractor 1) by the positioning unit 21. The vehicle-mounted electronic control unit 18 is configured as an automatic travel control unit configured to perform automatic travel control to cause the tractor 1 to automatically travel along the target travel route P within the travel region S, based on the positioning information of the tractor 1 acquired by the positioning unit 21 using the satellite positioning system.

The automatic traveling control includes an automatic transmission control for automatically controlling an actuation of the transmission device 13, an automatic braking control for automatically controlling an actuation of the brake operation mechanism 15, an automatic steering control for automatically steering the left and right front wheels 5, and an automatic work control for automatically controlling an actuation of the work device 12 such as the rotary tilling device.

In the automatic transmission control, the transmission control unit 181 automatically controls an actuation of the transmission device 13 so that the target travel speed set in accordance with a travel mode and the like of the tractor 1 on the target travel route P is obtained as the vehicle speed of the tractor 1, based on the route information of the target travel route P including the target travel speed, an output of the positioning unit 21, and an output of the vehicle speed sensor 19.

In the automatic braking control, based on the target travel route P and the output of the positioning unit 21, the braking control unit 182 automatically controls an actuation of the brake operation mechanism 15 so that in a braking area included in the route information of the target travel route P, the left and right side brakes properly brake the left and right rear wheels 6.

In the automatic steering control, based on the route information of the target travel route P and the output of the positioning unit 21, the steering angle setting unit 184 evaluates and sets the target steering angle of the left and right front wheels 5 so that the tractor 1 automatically travels on the target travel route P, and outputs the set target steering angle to the power steering mechanism 14. The power steering mechanism 14 automatically steers the left and right front wheels 5, based on the target steering angle and the output of the steering angle sensor 20, so that the target steering angle is obtained as the steering angle of the left and right front wheels 5.

In the automatic work control, the work device control unit 183 automatically controls an actuation of the clutch operation mechanism 16 and the lifting drive mechanism 17, based on the route information of the target travel route P and the output of the positioning unit 21 so that a predetermined work (for example, a tilling work) by the work device 12 is started as the tractor 1 reaches a work start point such as the starting end of the work route P1 (see, for example, FIG. 3), and the predetermined work by the work device 12 is stopped as the tractor 1 reaches a work end point such as the terminal end of the work route P1 (see, for example, FIG. 3).

Thus, in the tractor 1, the automatic traveling unit 2 includes the transmission device 13, the power steering mechanism 14, the brake operation mechanism 15, the clutch operation mechanism 16, the lifting drive mechanism 17, the vehicle-mounted electronic control unit 18, the vehicle speed sensor 19, the steering angle sensor 20, the positioning unit 21, the communication module 25, and the like.

In the present embodiment, it is not only possible to cause the tractor 1 to automatically travel without a user or the like riding in the cabin 10, but also possible to cause the tractor 1 to automatically travel with a user or the like riding in the cabin 10. Therefore, it is not only possible to cause the tractor 1 to automatically travel along the target travel route P without a user or the like riding in the cabin 10 by the automatic travel control of the vehicle-mounted electronic control unit 18, but possible to cause the tractor 1 to automatically travel along the target travel route P, even with a user or the like riding in the cabin 10, by the automatic travel control of the vehicle-mounted electronic control unit 18.

If a user or the like is riding in the cabin 10, it is also possible to switch between an automatic travel state where the tractor 1 is caused to automatically travel by the vehicle-mounted electronic control unit 18, and a manual travel state where the tractor 1 is caused to travel based on a driving operation of the user or the like. Therefore, it is possible to switch from the automatic travel state to the manual travel state while the tractor 1 automatically travels on the target travel route P in the automatic travel state, and on the other hand, it is also possible to switch from the manual travel state to the automatic travel state while the tractor 1 travels in the manual travel state. For switching between the manual travel state and the automatic travel state, for example, a switching operation unit configured to switch between the automatic travel state and the manual travel state may be provided in the vicinity of the driver seat 39, and further the switching operation unit may be displayed on the display unit 51 of the mobile communication terminal 3. Further, it is possible to switch from the automatic travel state to the manual travel state if the user operates the steering wheel 38 while the automatic traveling control is performed by the vehicle-mounted electronic control unit 18.

As illustrated in FIGS. 1 and 2, the tractor 1 includes an obstacle detection system 100 configured to detect an obstacle around the tractor 1 (traveling machine body 7) to avoid a collision with the obstacle. The obstacle detection system 100 includes a plurality of rider sensors 101 and 102 configured measure a distance to a target to be measured in a three-dimensional manner by using a laser, sonar units 103 and 104 including a plurality of sonars capable of measuring a distance to a target to be measured by using ultrasonic waves, an obstacle detection unit 110, and a collision avoidance control unit 111.

A target to be measured which is measure by the rider sensors 101 and 102 and the sonar units 103 and 104 is an object, a person, or the like. The rider sensors 101 and 102 include the front rider sensor 101 configured to measure a front side of the tractor 1 as a target to be measured and the rear rider sensor 102 configured to measure a rear side of the tractor 1 as a target to be measured. The sonar units 103 and 104 include the right sonar unit 103 configured to measure a right side of the tractor 1 as a target to be measured and the left sonar unit 104 configured to measure a left side of the tractor 1 as a target to be measured.

The obstacle detection unit 110 is configured to perform an obstacle detection process in which a target to be measured such as an object and a person within a predetermined distance are detected as an obstacle, based on measurement information of the rider sensors 101 and 102 and the sonar units 103 and 104. The collision avoidance control unit 111 is configured to perform collision avoidance control for decelerating the tractor 1 or stopping the tractor 1 from traveling when the obstacle detection unit 110 detects an obstacle. In the collision avoidance control, the collision avoidance control unit 111 not only decelerates the tractor 1 or stops the tractor 1 from traveling, but also activates a notification device 26 such as an alarm buzzer and an alarm lamp to notify that there is an obstacle. In the collision avoidance control, the collision avoidance control unit 111 uses communication modules 25 and 53 to communicate to the mobile communication terminal 3 from the tractor 1 to display the presence of an obstacle on the display unit 51 so that it is possible to notify that there is the obstacle.

The obstacle detection unit 110 repeatedly performs in real time the obstacle detection process based on the measurement information of the rider sensors 101 and 102 and the sonar units 103 and 104 to appropriately detect an obstacle such as an object and a person. The collision avoidance control unit 111 performs collision avoidance control for avoiding collision with an obstacle detected in real time.

The obstacle detection unit 110 and the collision avoidance control unit 111 are provided in the vehicle-mounted electronic control unit 18. The vehicle-mounted electronic control unit 18 is communicably connected to an electronic control unit for the engine, the rider sensors 101 and 102, the sonar units 103 and 104, and the like included in a common rail system, through a controller area network (CAN).

Thus, the automatic travel system may be applied not only to the tractor 1 as the work vehicle A, but also to a plurality of types of work vehicles including a riding-type work vehicle such as a riding-type rice transplanter, a combine, a riding-type grass mower, a wheel loader, and a snowplow, and an unmanned work vehicle such as an unmanned grass mower. As a result, for example, after the tractor 1 is caused to automatically travel, a rice transplanter may be automated, and further, after that, a combine may be caused to automatically travel. Further, after the tractor 1 is caused to automatically travel, a different model of the tractor 1 may be caused to automatically travel. Thus, in the travel region S such as a farm field, a plurality of types of work vehicles A may be caused to automatically travel by a plurality of number of times.

In the automatic travel system, when the work vehicle A is caused to automatically travel along the target travel route P in the travel region S, past travel position information for a travel position of the work vehicle A at that time is recorded. The past travel position information may be recorded every time the work vehicle A automatically travels, and thus, past travel position information of various types of work vehicles A may be recorded. Therefore, in the automatic travel system, when a certain work vehicle A is caused to automatically travel, the recorded past travel position information of another work vehicle A is utilized, and thus, the work vehicle A automatically travels while improving the work efficiency.

When a user or the like utilizes the automatic travel system, it is necessary to input an ID set for each user. For example, the user is allowed to utilize the automatic travel system by first inputting the ID set for the user into the mobile communication terminal 3 by operating the display unit 51 or the like. When the work vehicle A is caused to automatically travel by the user or the like using the automatic travel system, the past travel position information of the work vehicle A and various other information are recorded in association with the input ID. As a result, when the work vehicle A is caused to automatically travel by using the automatic travel system, if the user or the like inputs the ID of the user, it is possible to utilize the past travel position information and various other information of the work vehicle A associated with the ID.

As illustrated in FIG. 2, the mobile communication terminal 3 includes a past travel position information recording unit 56 (corresponding to a first travel position information recording unit) configured to record past travel position information (corresponding to first travel position information) for a travel position of the work vehicle A traveling in the travel region S, and a current travel position information acquisition unit 57 (corresponds to a second travel position information acquisition unit) configured to acquire current travel position information (corresponding to second travel position information) for a travel position when the work vehicle A travels in the travel region S.

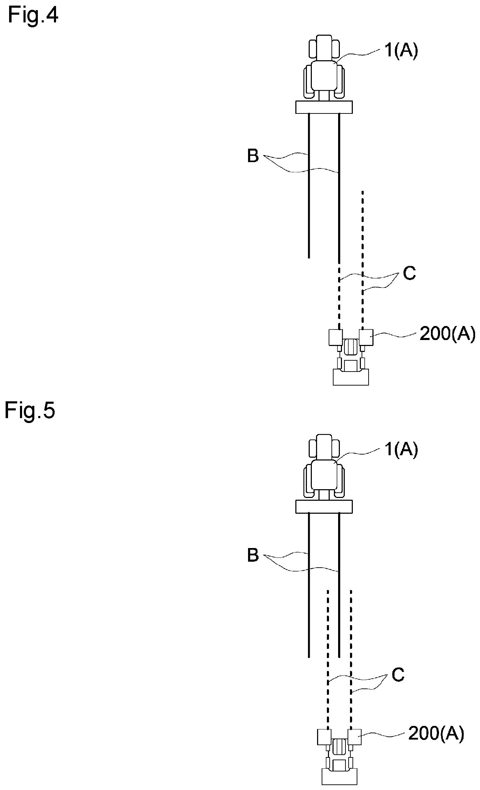

If the work vehicle A actually automatically travels along the target travel route P (see FIG. 3) in the travel region S, the past travel position information recording unit 56 records past travel position information, based on the position information of the work vehicle A acquired by the positioning unit 21 using the satellite positioning system, and stores the recorded past travel position information in the terminal storage unit 55. The past travel position information includes not only the travel trajectory of the work vehicle A but also a past wheel passing position B (a position indicated by a solid line in FIG. 4 and FIG. 5) obtained when the work vehicle A travels in the travel region S, and the past travel position information recording unit 56 also serves as a first wheel passing position recording unit.

If the work vehicle A is caused to automatically travel in the travel region S, the current travel position information acquisition unit 57 acquires current travel position information, based on the position information of the work vehicle A acquired by the positioning unit 21 using the satellite positioning system, and stores the acquired current travel position information in the terminal storage unit 55. The current travel position information includes not only the current position of the work vehicle A, but also a scheduled current wheel passing position C (a position indicated by a dotted line in FIG. 4 and FIG. 5) estimated when the work vehicle A travels in the travel region S, and the current travel position information acquisition unit 57 also serves as a scheduled second wheel passing position acquisition unit.

As illustrated in FIG. 4, if the past wheel passing position B (indicated by a solid line in FIG. 4) of the work vehicle A (for example, the tractor 1) that automatically travels in the past overlaps with the scheduled current wheel passing position C (indicated by a dotted line in FIG. 4) of the work vehicle A (for example, the rice transplanter 200) that automatically travels this time, the work efficiency of the work vehicle A (rice transplanter 200) that automatically travels this time may possibly decrease. At the past wheel passing position B, the ground is deepened by a weight of the work vehicle A (tractor 1) that automatically travels in the past. Therefore, if the scheduled current wheel passing position C overlaps with the past wheel passing position B, the work vehicle A (rice transplanter 200) that automatically travels this time slips, and thus, the work efficiency is lowered.

Therefore, as illustrated in FIG. 4, if the scheduled current wheel passing position C of the work vehicle A (for example, the rice transplanter 200) that automatically travels this time overlaps with the past wheel passing position B of the work vehicle A (for example, the tractor 1) that automatically travels in the past, it is required that the scheduled current wheel passing position C of the work vehicle A (for example, the rice transplanter 200) that automatically travels this time is different from the past wheel passing position B of the work vehicle A (for example, the tractor 1) that automatically travels in the past, as illustrated in FIG. 5.

FIGS. 4 and 5 illustrate a case where the tractor 1 and the rice transplanter 200 are illustrated as the work vehicle A, but for example, even if the work vehicle A having a right-and-left vehicle width different from that of the work vehicle A that automatically travels in the past automatically travels this time, the past wheel passing position B and the scheduled current wheel passing position C may overlap. In such a case, when the work vehicle A travels so that the past wheel passing position B is differed from the scheduled current wheel passing position C, the work vehicle A can automatically travel while preventing a slip from occurring, and thus, it is possible to improve the work efficiency.

As described above, when the work vehicle A automatically travels, the travel route generation unit 54 generates the target travel route P in accordance with the work vehicle A that automatically travels this time within the travel region S, as illustrated in FIG. 3. Therefore, in generating the target travel route P, the travel route generation unit 54 generates the target travel route P within the travel region S so that the past wheel passing position B is different from the scheduled current wheel passing position C. At this time, the target travel route P may be generated by using the same reference station 4 as the reference station 4 used when the work vehicle A automatically travels in the past. If the same reference station 4 may not be used, the position of the reference station 4 used this time is corrected in accordance with a deviation of a relative position between the reference station 4 used in the past and the reference station 4 used this time, to generate the target travel route P.

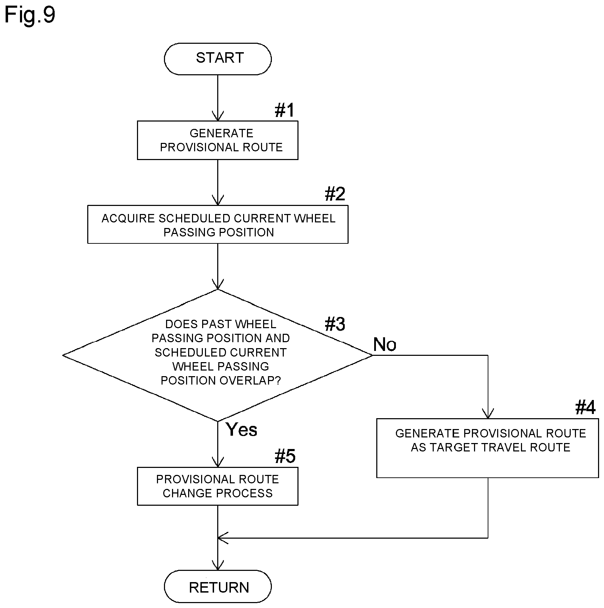

An operation for generating the target travel route P for the automatic travel of this time will be described with reference to a flowchart in FIG. 9.

A provisional route generation unit 58 (see FIG. 2) generates a provisional route within the travel region S according to the work vehicle A that automatically travels this time (step #1 in FIG. 9). The provisional route generation unit 58 uses the farm field information and the vehicle body information stored in the terminal storage unit 55 to generate the provisional route according to the work vehicle A that automatically travels this time. The provisional route is generated by the provisional route generation unit 58 in much the same way as when the target travel route P is generated by the travel route generation unit 54 illustrated in FIG. 3, and thus, the illustration of the provisional route will be omitted, but similarly to the target travel route P of FIG. 3, the provisional route is a route including a plurality of the work routes P1 and a plurality of the coupling routes P2.

When the provisional route generation unit 58 generates the provisional route, the current travel position information acquisition unit 57 prepares for a case where the work vehicle A automatically travels along the provisional route and acquires the scheduled current wheel passing position C of the work vehicle A for the case (step #2 of FIG. 9). As a result, the past travel position information recording unit 56 records the past wheel passing position B of the work vehicle A (tractor 1) that automatically travels in the past, and the current travel position information acquisition unit 57 acquires the scheduled current wheel passing position C in the provisional route of the work vehicle A (rice transplanter 200) that automatically travels this time.

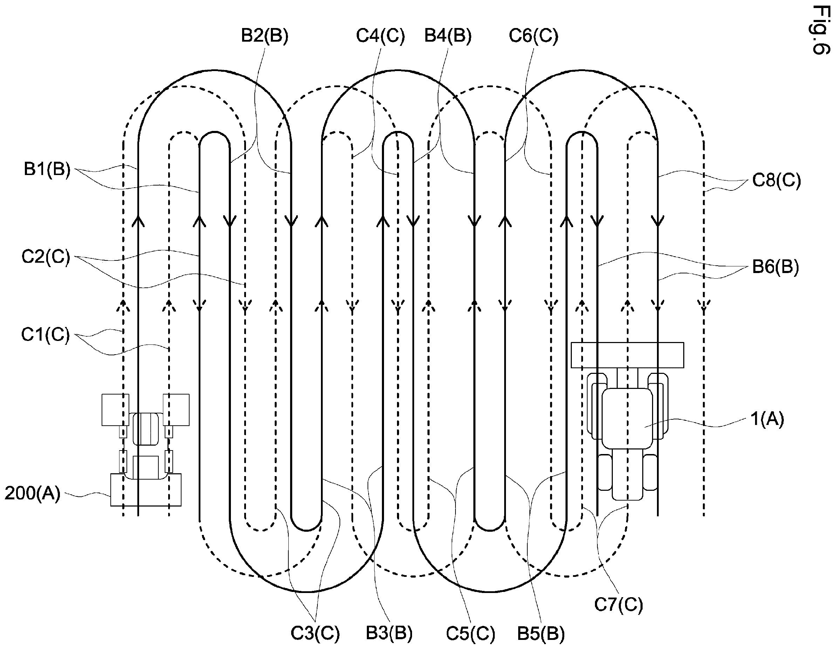

Therefore, for example, as illustrated in FIG. 6, the display control unit 59 (see FIG. 2) may cause the display unit 51 to display the past wheel passing position B of the work vehicle A (tractor 1) that automatically travels in the past, recorded by the past travel position information recording unit 56, and the scheduled current wheel passing position C in the provisional route of the work vehicle A (rice transplanter 200) that automatically travels this time, acquired by the current travel position information acquisition unit 57, in a superimposed manner.

FIG. 6 illustrates a state in which the travel region S, the central region R1, and the outer peripheral region R2 are omitted, and the past wheel passing position B and the scheduled current wheel passing position C are displayed in a superimposed manner. In the past wheel passing position B, according to a travel order, sections corresponding to the linear work route P1 are assigned with orders of B1 to B6 from a left side, and also in the scheduled current wheel passing position C, according to a travel order, sections corresponding to the linear work route P1 are assigned with orders of C1 to C8 from a left side. Further, although FIG. 6 illustrates an example in which the work vehicle A (the tractor 1 or the rice transplanter 200) is displayed, it is possible to appropriately change whether the work vehicle A is displayed.

A wheel passing position overlap determination unit 60 (see FIG. 2) determines whether there is a section where the past wheel passing position B and the scheduled current wheel passing position C overlap in the travel region S (step #3 of FIG. 9). If the wheel passing position overlap determination unit 60 determines that there is no overlapping section, the travel route generation unit 54 directly generates the provisional route to be used as the target travel route P (if No in step #3 of FIG. 9, step #4). On the other hand, if the wheel passing position overlap determination unit 60 determines that there is an overlapping section, the travel route generation unit 54 performs a provisional route change process for changing the provisional route to generate the target travel route P (if Yes in step #3 of FIG. 9, step #5).

The provisional route change process includes two processes, that is, a first provisional route change process and a second provisional route change process, and thus, each of the provisional route change processes will be described below based on FIG. 6 to FIG. 8. It is possible to previously set whether to perform the first provisional route change process or the second provisional route change process for the provisional route change process, and for example, the user or the like may select and set whether to perform the first provisional route change process or the second provisional route change process by operating the display unit 51.

FIG. 6 illustrates a case where in the provisional route, the scheduled current wheel passing position C in a part of route sections, out of a plurality of route sections corresponding to the linear work routes P1, overlaps with the past wheel passing position B. The overlapping sections are formed by, for example, a past wheel passing position B1 (first position from the left) and a scheduled current wheel passing position C2 (second position from the left), a past wheel passing position B3 (third position from the left) and a scheduled current wheel passing position C3 (third position from the left), a past wheel passing position B4 (fourth position from the left) and a scheduled current wheel passing position C5 (fifth position from the left), a past wheel passing position B5 (fifth position from the left) and a scheduled current wheel passing position C6 (sixth position from the left), and a past wheel passing position B6 and a scheduled current wheel passing position C8 (eighth position from the left).

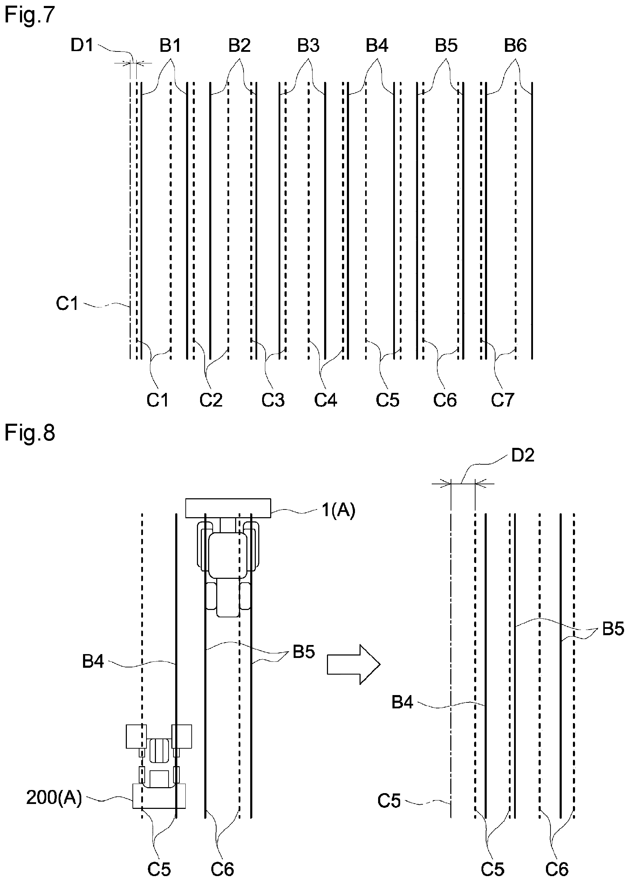

In the first provisional route change process, as illustrated in FIG. 7, at the scheduled current wheel passing position C in FIG. 6, the travel route generation unit 54 changes the provisional route so that the scheduled current wheel passing position C (indicated by a dotted line in FIG. 7) is shifted relative to the past wheel passing position B (indicated by a solid line in FIG. 7) by a predetermined amount D1 in a direction orthogonal to the travel direction over the entire provisional route. FIG. 6 illustrates a state before the scheduled current wheel passing position C is shifted and FIG. 7 illustrates a state after the scheduled current wheel passing position C is shifted.

In FIG. 7, the section corresponding to the curved coupling route P2 is omitted, and only the section corresponding to the linear working route P1 is illustrated. Further, the leftmost side of the scheduled current wheel passing position C yet to be shifted is indicated by a dash-dot-dash line, and the scheduled current wheel passing position C already shifted is indicated by a dotted line. It is noted that the scheduled current wheel passing position C8 in FIG. 6 is outside the travel region S as a result of the scheduled current wheel passing position C being shifted.

In the first provisional route change process, the predetermined amount D1 by which the scheduled current wheel passing position C is shifted may be appropriately set by a user and the like, and may suffice if the past wheel passing position B and the scheduled current wheel passing position C are placed at different positions over the entire provisional route. Further, the scheduled current wheel passing position C is shifted to the right side as illustrated in FIG. 7, but may be shifted to the left side, and the shift direction may be appropriately set by a user and the like.

In the second provisional route change process, as illustrated in FIG. 8, the travel route generation unit 54 changes the provisional route so that in a part of the provisional route where the past wheel passing position B overlaps with the scheduled current wheel passing position C in the provisional route, the scheduled current wheel passing position C is shifted by a predetermined amount D2 in a direction orthogonal to the travel direction relative to the past wheel passing position B. As described above, in the second provisional route change process, the travel route generation unit 54 shifts only a part of the scheduled current wheel passing position C of the provisional route by the predetermined amount D2 in the direction orthogonal to the travel direction.

FIG. 8 illustrates a case where out of the past wheel passing position B and the scheduled current wheel passing position C in FIG. 6, past wheel passing positions B4 and B5 and scheduled current wheel passing positions C5 and C6 are shifted. Also in FIG. 8, similarly to FIG. 7, the section corresponding to the curved coupling route P2 is omitted, and only the section corresponding to the linear working route P1 is illustrated. In FIG. 8, the past wheel passing positions B4 and B5 and the scheduled current wheel passing positions C5 and C6 yet to be shifted are illustrated on the left side and the past wheel passing positions B4 and B5 and the scheduled current wheel passing positions C5 and C6 already shifted are illustrated on the right side. On the right side, the leftmost side of the scheduled current wheel passing position C5 yet to be shifted is indicated by a dash-dot-dash line, and the scheduled current wheel passing positions C5 and C6 already shifted are indicated by a dotted line. It is noted that in FIG. 8, to facilitate understanding of the past wheel passing position B and the scheduled current wheel passing position C, the work vehicle A (the tractor 1 and the rice transplanter 200) are also illustrated on the left side.

In the second provisional route change process, the user or the like may appropriately select and set which section of the provisional route is to be shifted. The predetermined amount and the direction of the shift may be appropriately changed by the user and the like, and the predetermined amount and the direction of the shift may be set to different amounts and directions depending on the section to be shifted.

Thus, if there is no section where the past wheel passing position B and the scheduled current wheel passing position C overlap, the travel route generation unit 54 directly generates the provisional route to be used as the target travel route P, and if there is the section where the past wheel passing position B and the scheduled current wheel passing position C overlap, the travel route generation unit 54 performs the first provisional route change process or the second provisional route change process to generate the target travel route P obtained by changing the provisional route.

Here, when the work vehicle A is caused to automatically travel, there is a case depending on a work situation such as a type of the work vehicle A and a work content, in which the past wheel passing position B and the scheduled current wheel passing position C may overlap for the target travel route P. Therefore, when the travel route generation unit 54 generates the target travel route P, the user or the like may select whether to permit change of the provisional route. When change of the provisional route is permitted, as illustrated in the flowchart of FIG. 9, whether there is a section where the past wheel passing position B and the scheduled current wheel passing position C overlap is determined, and based on the determination result, the travel route generation unit 54 may generate the target travel route P. On the contrary, when change of the provisional route is not permitted, the travel route generation unit 54 may directly generate the provisional route to be used as the target travel route P.

Upon the travel route generation unit 54 generating the target travel route P along which the work vehicle A automatically travels this time, the vehicle-mounted electronic control unit 18 may perform automatic travel control for causing the tractor 1 to automatically travel along the current target travel route P generated within the travel region S, based on the positioning information of the tractor 1 acquired by the positioning unit 21 using the satellite positioning system. At this time, the vehicle-mounted electronic control unit 18 may perform the automatic travel control by using the same reference station 4 as the reference station 4 used in the past automatic travel. If the same reference station 4 is not usable, the vehicle-mounted electronic control unit 18 performs the automatic travel control by correcting the position of the reference station 4 used this time in accordance with a deviation of a relative position between the reference station 4 used in the past and the reference station 4 used this time.

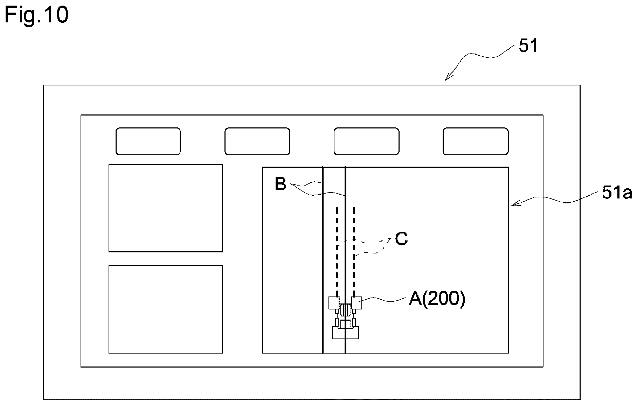

At a start of the automatic travel of the work vehicle A or during the automatic running, as illustrated in FIG. 10, the display control unit 59 causes the display unit 51 to display the past wheel passing position B of the work vehicle A that automatically travels in the past and the scheduled current wheel passing position C of the work vehicle A (for example, the rice transplanter 200) that automatically travels this time overlaps, in a superimposed manner. The past wheel passing position B is included in the past travel position information recorded in the past travel position information recording unit 56. The scheduled current wheel passing position C is acquired by the current travel position information acquisition unit 57 by estimating the scheduled current wheel passing position C from the current position of the work vehicle A, based on the current position of the work vehicle A acquired by the positioning unit 21 using the positioning satellite.

As illustrated in FIG. 10, the display control unit 59 causes the display unit 51 to display the past wheel passing position B and the scheduled current wheel passing position C, in a specific display area 51a of the display unit 51 in a superimposed manner. At this time, in displaying the scheduled current wheel passing position C, the display control unit 59 may display not only a position through which a wheel passes until the work vehicle A automatically travels to the current position at this stage, but also a scheduled wheel passing position ahead by a predetermined distance from the current position. As a result, when the work vehicle A is caused to automatically travel, it is possible to check whether the past wheel passing position B and the scheduled current wheel passing position C overlap, and in addition, when the work vehicle A is continuously caused to automatically travel, it is possible to determine whether the past wheel passing position B and the scheduled current wheel passing position C overlap.

It is noted that the display control unit 59 causes the display unit 51 to display the past wheel passing position B and the scheduled current wheel passing position C in a superimposed manner, but it may suffice to display the past travel position information recorded by the past travel position information recording unit 56 and the current travel position information acquired by the current travel position information acquisition unit 57, in a superimposed manner, and a specific display content may be appropriately changed. For example, the current position of the work vehicle A may be displayed as the current travel position information, instead of the scheduled current wheel passing position C. Further, the past travel position information is not limited to the past wheel passing position B, and the movement trajectory of the work vehicle A obtained in the past automatic travel may also be used.

Although not illustrated, the past wheel passing position B and the scheduled current wheel passing position C may be displayed in a superimposed manner not only on the display unit 51 of the mobile communication terminal 3 but also on the display unit provided in the work vehicle A. Further, in a display device provided separately of the mobile communication terminal 3 and the work vehicle A, the past wheel passing position B and the scheduled current wheel passing position C may be displayed in a superimposed manner.

### Other Embodiments

Other embodiments of the present invention will be described.

It is noted that each of configurations of embodiments described below may be applied not only alone, but may be applied also in combination with the configuration of another embodiment.
(1) Various modifications may be made to a configuration of a work vehicle.

For example, the work vehicle may be configured as a hybrid specification in which the engine 9 and an electric motor for traveling are provided, or may be configured as an electroactuation specification in which an electric motor for traveling is provided instead of the engine 9.

For example, the work vehicle may be configured as a semi-crawler specification in which left and right crawlers are provided as a travel unit instead of the left and right rear wheels 6.

For example, the work vehicle may be configured as a rear wheel steering specification in which the left and right rear wheels 6 function as steering wheels.

(2) In the above embodiment, an example is employed in which in the automatic travel system, the mobile communication terminal 3 including the past travel position information recording unit 56, the current travel position information acquisition unit 57, and the display control unit 59 is employed for the travel state display device, but, for example, the travel state display device may be provided which simply includes a display unit configured to display a travel state of a work vehicle when the work vehicle is caused to travel, but does not include the automatic travel system. At this time also, similarly to the above embodiment, the travel state display device may include the past travel position information recording unit, the current travel position information acquisition unit, and the display control unit.

In this case, when the work vehicle travels in the travel region, the display control unit may cause the display unit of the travel state display device to display the past travel position information recorded by the past travel position information recording unit and the current travel position information acquired by the current travel position information acquisition unit, in a superimposed manner. Therefore, in visually recognizing the display unit, the user or the like can grasp a relationship between the past travel position information and the current travel position information. As a result, it is possible to ensure that the work vehicle travels efficiently by effectively utilizing the past travel position information, and thus, it is possible to improve the working efficiency.

(3) In the above embodiment, the example is employed in which the mobile communication terminal 3 includes the travel route generation unit 54, the past travel position information recording unit 56, the current travel position information acquisition unit 57, the provisional route generation unit 58, and the display control unit 59, but for example, the travel route generation unit 54, the past travel position information recording unit 56, the current travel position information acquisition unit 57, the provisional route generation unit 58, the display control unit 59, and the like may be provided on the work vehicle A side, and may be provided in an external management device or the like.

### INDUSTRIAL APPLICABILITY

The present invention is applicable to various types of travel state display devices for displaying a travel state of a work vehicle, and also to various types of automatic travel systems for causing a work vehicle to automatically travel.

### DESCRIPTION OF REFERENCE NUMERALS

3 Mobile communication terminal (travel state display device)
18 Vehicle-mounted electronic control unit (automatic travel control unit)
54 Travel route generation unit
56 Past travel position information recording unit (first travel position information recording unit, first wheel passing position recording unit)
57 Current travel position information acquisition unit (second travel position information acquisition unit, scheduled second wheel passing position acquisition unit)
58 Provisional route generation unit
59 Display control unit
A Work vehicle
B Past wheel passing position (first wheel passing position)
C Scheduled current wheel passing position (scheduled second wheel passing position)
P Target travel route
S Travel region

## Claims

1. A travel state display device (3), comprising:
A first travel position information recording unit (56) configured to acquire and to record, first travel position information relating to a travel position of a first work vehicle that travels in a travel region (S) by using a satellite positioning system;
a second travel position information acquisition unit (57) configured to acquire second travel position information relating to a travel position of a second work vehicle when the second work vehicle travels in the travel region by using the satellite positioning system, the second work vehicle being different from the first work vehicle; and
a display control unit (59) configured to cause a display unit (51) to display the first travel position information and the second travel position information in a superimposed manner when the second work vehicle travels in the travel region,
**characterised in that**
the first travel position information includes a first wheel passing position (B) when the first work vehicle travels in the travel region (S),
the second travel position information includes a scheduled second wheel passing position (C) estimated from a current position of the second work vehicle and obtained when the second work vehicle travels in the travel region (S), and
the display control unit (59) configured to cause the display unit (51) to display the first wheel passing position (B) of the first work vehicle and the scheduled second wheel passing position (C) of the second work vehicle in a superimposed manner.

2. An automatic travel system (1), comprising:
an automatic travel unit (2) configured to be mounted on a work vehicle (1), and
the travel state display device (3) of claim 1 set to communicate with the automatic traveling unit (2).

3. The automatic travel system (1) according to claim 2, further comprising:
a first wheel passing position recording unit (56) configured to acquire and to record, a first wheel passing position of a first work vehicle that travels in a travel region (S) by using a satellite positioning system;
a scheduled second wheel passing position acquisition unit (57) configured to acquire a scheduled second wheel passing position when a second work vehicle different from the first work vehicle travels in the travel region (S);
a travel route generation unit (54) configured to generate, in the travel region (S), a target travel route of the second work vehicle so that the first wheel passing position differs from the scheduled second wheel passing position; and
an automatic travel control unit (18) configured to cause the second work vehicle to automatically travel along the target travel route generated by the travel route generation unit (54), based on position information of the second work vehicle acquired by using the satellite positioning system.

4. The automatic travel system (1) according to claim 3, comprising a provisional route generation unit (58) configured to generate, in the travel region (S), a provisional route corresponding to the second work vehicle, wherein
when the first wheel passing position overlaps with the scheduled second wheel passing position in the provisional route, the travel route generation unit (54) generates the target travel route of the second work vehicle by changing the provisional route in a manner that the scheduled second wheel passing position is shifted relative to the first wheel passing position by a predetermined amount in a direction orthogonal to a travel direction over the entire provisional route.

5. The automatic travel system (1) according to claim 3 or 4, comprising a provisional route generation unit (58) configured to generate, in the travel region (S), a provisional route corresponding to the second work vehicle, wherein
when the first wheel passing position overlaps with the scheduled second wheel passing position in the provisional route, the travel route generation unit (58) generates the target travel route of the second work vehicle by changing the provisional route in a manner that the scheduled second wheel passing position is shifted relative to the first wheel passing position by a predetermined amount in a direction orthogonal to a travel direction, in a part of the provisional route in which the first wheel passing position overlaps with the scheduled second wheel passing position in the provisional route.

## Patentansprüche

1. Fahrzustandsanzeigevorrichtung (3), die Folgendes umfasst:
eine erste Fahrpositionsinformationsaufzeichnungseinheit (56), die dazu ausgelegt ist, erste Fahrpositionsinformationen, die eine Fahrposition eines ersten Arbeitsfahrzeugs betreffen, das in einem Fahrbereich (S) fährt, unter Verwendung eines Satellitenpositionsbestimmungssystems zu erfassen und aufzuzeichnen;
eine zweite Fahrpositionsinformationserfassungseinheit (57), die dazu ausgelegt ist, zweite Fahrpositionsinformationen, die eine Fahrposition eines zweiten Arbeitsfahrzeugs betreffen, wenn das zweite Arbeitsfahrzeug im Fahrbereich fährt, unter Verwendung des Satellitenpositionsbestimmungssystems zu erfassen, wobei sich das zweite Arbeitsfahrzeug vom ersten Arbeitsfahrzeug unterscheidet; und
eine Anzeigesteuereinheit (59), die dazu ausgelegt ist, eine Anzeigeeinheit (51) zu veranlassen, die ersten Fahrpositionsinformationen und die zweiten Fahrpositionsinformationen in einer überlagerten Weise anzuzeigen, wenn das zweite Arbeitsfahrzeug im Fahrbereich fährt,
**dadurch gekennzeichnet, dass**
die ersten Fahrpositionsinformationen eine erste Raddurchlaufposition (B) beinhalten, wenn das erste Arbeitsfahrzeug in Fahrbereich (S) fährt,
die zweiten Fahrpositionsinformationen eine geplante zweite Raddurchlaufposition (C) beinhalten, die anhand der aktuellen Position des zweiten Arbeitsfahrzeugs geschätzt und erhalten wird, wenn das zweite Arbeitsfahrzeug im Fahrbereich (S) fährt, und
die Anzeigesteuereinheit (59) dazu ausgelegt, die Anzeigeeinheit (51) zu veranlassen, die erste Raddurchlaufposition (B) des ersten Arbeitsfahrzeugs und die geplante zweite Raddurchlaufposition (C) des zweiten Arbeitsfahrzeugs in einer überlagerten Weise anzuzeigen.

2. Automatisches Fahrsystem (1), das Folgendes umfasst:
eine automatische Fahreinheit (2), die dazu ausgelegt ist, an einem Arbeitsfahrzeug (1) montiert zu sein, und
die Fahrzustandsanzeigevorrichtung (3) nach Anspruch 1, die zum Kommunizieren mit der automatischen Fahreinheit (2) eingestellt ist.

3. Automatisches Fahrsystem (1) nach Anspruch 2, das ferner Folgendes umfasst:
eine erste Raddurchlaufpositionsaufzeichnungseinheit (56), die dazu ausgelegt ist, eine erste Raddurchlaufposition eines ersten Arbeitsfahrzeugs, das im Fahrbereich (S) fährt, unter Verwendung eines Satellitenpositionsbestimmungssystems zu erfassen und aufzuzeichnen;
eine Erfassungseinheit (57) für eine geplante zweite Raddurchlaufposition, die dazu ausgelegt ist, eine geplante zweite Raddurchlaufposition zu erfassen, wenn ein zweites Arbeitsfahrzeug, das sich vom ersten Arbeitsfahrzeug unterscheidet, im Fahrbereich (S) fährt;
eine Fahrtroutenerzeugungseinheit (54), die dazu ausgelegt ist, im Fahrbereich (S) eine Zielfahrtroute des zweiten Arbeitsfahrzeugs derart zu erzeugen, dass sich die erste Raddurchlaufposition von der geplanten zweiten Raddurchlaufposition unterscheidet; und
eine automatische Fahrsteuereinheit (18), die dazu ausgelegt ist, auf Basis von Positionsinformationen des zweiten Arbeitsfahrzeugs, die unter Verwendung des Satellitenpositionsbestimmungssystems erfasst wurden, das zweite Arbeitsfahrzeug zu veranlassen, automatisch entlang der von der Fahrtroutenerzeugungseinheit (54) erzeugten Zielfahrtroute zu fahren.

4. Automatisches Fahrsystem (1) nach Anspruch 3, das eine Erzeugungseinheit (58) für eine provisorische Route umfasst, die dazu ausgelegt ist, im Fahrbereich (S) eine provisorische Route zu erzeugen, die dem zweiten Arbeitsfahrzeug entspricht, wobei
wenn die erste Raddurchlaufposition die geplante zweite Raddurchlaufposition auf der provisorischen Route überlappt, die Fahrtroutenerzeugungseinheit (54) die Zielfahrtroute des zweiten Arbeitsfahrzeugs durch Ändern der provisorischen Route in einer Weise erzeugt, dass die geplante zweite Raddurchlaufposition relativ zur ersten Raddurchlaufposition um einen vorbestimmten Betrag in eine Richtung orthogonal zu einer Fahrtrichtung über die gesamte provisorische Route verschoben wird.

5. Automatisches Fahrsystem (1) nach Anspruch 3 oder 4, das eine Erzeugungseinheit (58) für eine provisorische Route umfasst, die dazu ausgelegt ist, im Fahrbereich (S) eine provisorische Route zu erzeugen, die dem zweiten Arbeitsfahrzeug entspricht, wobei
wenn die erste Raddurchlaufposition die geplante zweite Raddurchlaufposition auf der provisorischen Route überlappt, die Fahrtroutenerzeugungseinheit (58) die Zielfahrtroute des zweiten Arbeitsfahrzeugs durch Ändern der provisorischen Route in einer Weise erzeugt, dass die geplante zweite Raddurchlaufposition relativ zur ersten Raddurchlaufposition um einen vorbestimmten Betrag in eine Richtung orthogonal zu einer Fahrtrichtung in einem Teil der provisorischen Route, in der die erste Raddurchlaufposition die geplante zweite Raddurchlaufposition in der provisorischen Route überlappt, verschoben wird.

## Revendications

1. Dispositif d'affichage d'état de déplacement (3), comprenant :
une unité d'enregistrement de premières informations de position de déplacement (56) configurée pour acquérir et enregistrer des premières informations de position de déplacement relatives à une position de déplacement d'un premier véhicule de travail qui se déplace dans une région de déplacement (S) en utilisant un système de positionnement par satellite ;
une unité d'acquisition de deuxièmes informations de position de déplacement (57) configurée pour acquérir des deuxièmes informations de position de déplacement relatives à une position de déplacement d'un deuxième véhicule de travail lorsque le deuxième véhicule de travail se déplace dans la région de déplacement en utilisant le système de positionnement par satellite, le deuxième véhicule de travail étant différent du premier véhicule de travail ; et
une unité de commande d'affichage (59) configurée pour amener une unité d'affichage (5l) à afficher les premières informations de position de déplacement et les deuxièmes informations de position de déplacement de manière superposée lorsque le deuxième véhicule de travail se déplace dans la région de déplacement,
**caractérisé en ce que**
les premières informations de position de déplacement comportent une première position de passage de roue (B) lorsque le premier véhicule de travail se déplace dans la région de déplacement (S),
les deuxièmes informations de position de déplacement comportent une deuxième position de passage de roue prévue (C) estimée à partir d'une position actuelle du deuxième véhicule de travail et obtenue lorsque le deuxième véhicule de travail se déplace dans la région de déplacement (S), et
l'unité de commande d'affichage (59) est configurée pour amener l'unité d'affichage (51) à afficher la première position de passage de roue (B) du premier véhicule de travail et la deuxième position de passage de roue prévue (C) du deuxième véhicule de travail de manière superposée.

2. Système de déplacement automatique (1), comprenant :
une unité de déplacement automatique (2) configurée pour être montée sur un véhicule de travail (1), et
le dispositif d'affichage d'état de déplacement (3) de la revendication 1, réglé pour communiquer avec l'unité de déplacement automatique (2).

3. Système de déplacement automatique (1) selon la revendication 2, comprenant en outre :
une unité d'enregistrement de première position de passage de roue (56) configurée pour acquérir et enregistrer une première position de passage de roue d'un premier véhicule de travail qui se déplace dans une région de déplacement (S) en utilisant un système de positionnement par satellite ;
une unité d'acquisition de deuxième position de passage de roue prévue (57) configurée pour acquérir une deuxième position de passage de roue prévue lorsqu'un deuxième véhicule de travail différent du premier véhicule de travail se déplace dans la région de déplacement (S) ;
une unité de génération d'itinéraire de déplacement (54) configurée pour générer, dans la région de déplacement (S), un itinéraire de déplacement cible du deuxième véhicule de travail de sorte que la première position de passage de roue diffère de la deuxième position de passage de roue prévue ; et
une unité de commande de déplacement automatique (18) configurée pour amener le deuxième véhicule de travail à se déplacer automatiquement le long de l'itinéraire de déplacement cible généré par l'unité de génération d'itinéraire de déplacement (54), sur la base d'informations de position du deuxième véhicule de travail acquises en utilisant le système de positionnement par satellite.

4. Système de déplacement automatique (1) selon la revendication 3, comprenant une unité de génération d'itinéraire provisoire (58) configurée pour générer, dans la région de déplacement (S), un itinéraire provisoire correspondant au deuxième véhicule de travail, dans lequel
lorsque la première position de passage de roue chevauche la deuxième position de passage de roue prévue dans l'itinéraire provisoire, l'unité de génération d'itinéraire de déplacement (54) génère l'itinéraire de déplacement cible du deuxième véhicule de travail en modifiant l'itinéraire provisoire de manière à ce que la deuxième position de passage de roue prévue soit décalée par rapport à la première position de passage de roue d'une quantité prédéterminée dans une direction orthogonale à une direction de déplacement sur l'ensemble de l'itinéraire provisoire.

5. Système de déplacement automatique (1) selon la revendication 3 ou 4, comprenant une unité de génération d'itinéraire provisoire (58) configurée pour générer, dans la région de déplacement (S), un itinéraire provisoire correspondant au deuxième véhicule de travail, dans lequel
lorsque la première position de passage de roue chevauche la deuxième position de passage de roue prévue dans l'itinéraire provisoire, l'unité de génération d'itinéraire de déplacement (58) génère l'itinéraire de déplacement cible du deuxième véhicule de travail en modifiant l'itinéraire provisoire de manière à ce que la deuxième position de passage de roue prévue soit décalée par rapport à la première position de passage de roue d'une quantité prédéterminée dans une direction orthogonale à une direction de déplacement dans une partie de l'itinéraire provisoire où la première position de passage de roue chevauche la deuxième position de passage de roue prévue dans l'itinéraire provisoire.
